Europäisches Patentamt

European Patent Office

Office européen des brevets

(11) Publication number: **0 206 163**
**B1**

# EUROPEAN PATENT SPECIFICATION

(45) Date of publication of patent specification: **03.10.90**

(51) Int. Cl.⁵: **G 21 C 15/02, G 21 C 3/32**

(21) Application number: **86108083.6**

(22) Date of filing: **13.06.86**

(54) **Nuclear fuel assembly.**

(30) Priority: **19.06.85 US 746619**

(43) Date of publication of application:
**30.12.86 Bulletin 86/52**

(45) Publication of the grant of the patent:
**03.10.90 Bulletin 90/40**

(84) Designated Contracting States:
**CH DE IT LI SE**

(56) References cited:
**EP-A-0 036 142**
**EP-A-0 050 837**
**EP-A-00 993 23**
**DE-A-3 400 901**
**FR-A-2 154 753**

(73) Proprietor: **WESTINGHOUSE ELECTRIC CORPORATION**
**Westinghouse Building Gateway Center**
**Pittsburgh Pennsylvania 15222 (US)**

(72) Inventor: **Taleyarkhan, Rusi Pesi**
**21-G Murray Court**
**Pittsburgh Pennsylvania 15239 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to nuclear fuel assemblies and, more particularly, to a fuel assembly for a boiling water reactor (BWR).

In a nuclear reactor, large amounts of energy are released through nuclear fission in the form of heat which is removed from the reactor core by means of a coolant circulated therethrough, and which heat then is extracted from the coolant to be used in performing useful work.

Generally, the fuel rods employed in a nuclear reactor are grouped together to form fuel assemblies arranged in a matrix to form the reactor core which is submersed in a flowing liquid, such as light water, serving both as a coolant for removing heat from the fuel rods and as a neutron moderator. In a boiling water reactor, typically the fuel assemblies are grouped in clusters of four, with one control rod associated with each cluster (commonly referred to also as a "fuel cell" of the reactor core), and each fuel assembly of a cluster comprises an array of fuel rods supported in parallel spaced relationship with respect to each other by transverse grids and surrounded by a tubular channel of substantially rectangular cross-section. Such fuel assemblies are disclosed in U.S. Patent Specifications US—A—3,689,358 and US—A—3,802,995 and in Canadian Patent Specification EP—A—0036142 corresponding to CA—A—1,150,423, for example.

In a fuel assembly of this type, the fuel rods in the central region of the bundle may be under-moderated and over-enriched. In order to remedy this situation, it has been proposed to increase the flow of moderator water through this central region either by substituting empty rods for fuel rods in the central region or by arranging water tubes in a cross-like pattern among the fuel rods or by employing an elongate, centrally disposed stiffening device with vertical water passageways (as in the above-mentioned Canadian Patent Specification) or by utilizing a so-called water-cross extending centrally through the cluster of fuel assemblies (EP—A1—0099323).

Broadly speaking, a water-cross is an elongate flow channel of generally cruciform cross-section. Typically, it comprises four radial coolant-flow panels which divide the outer tubular flow channel of the associated fuel assembly into four compartments and divide the bundle of rods within the outer flow channel into four sub- or mini-bundles.

The fuel rods of each mini-bundle, being held in parallel spaced relationship with respect to each other by transverse grids spaced apart in the longitudinal direction of the fuel rods, extend between and are connected to an upper tie plate and a lower tie plate. The fuel rods of each mini-bundle, together with the upper and lower tie plates and the transverse grids associated therewith, form a fuel-rod sub-assembly located in one of the compartments into which the outer tubular flow channel of the fuel assembly is divided by the water-cross extending therethrough. Conventionally, the water-cross in each fuel assembly ordinarily extends through the latter substantially for the full length of the fuel-rod sub-assemblies, corresponding to the distance between the upper and lower tie plates thereof.

In one known design of boiling water reactors, coolant enters the bottom nozzle of each fuel assembly through a side entrance and then is directed upwardly into the four mini-bundles and the water-cross associated therewith, about 9—10% of all the coolant flowing through the fuel assembly or fuel bundle passing through the water-cross. It has been found that the side entry of coolant in such reactors can result in considerable maldistribution of coolant flow through the mini-bundles, having regard to the difference between the mini-bundle with the highest mass flow rate and the mini-bundle with the lowest mass flow rate, which difference may amount to about 15 percent.

Such coolant-flow maldistribution can lead to certain problems. First, it can lead to an overall degradation of critical power ratio (CPR) margin of the bundle. Since the coolant flowing through fuel-rod mini-bundles cools the fuel rods as it flows along their heated surfaces, the amount of water entering each mini-bundle determines its CPR characteristics. However, the overall bundle CPR margin is dictated by the CPR margin of the most limiting mini-bundle. Known relationships indicate that a 15% reduction in the mass flow rate in one of the mini-bundle will lead to a CPR margin degradation of about 7%, which is undesirable.

Second, since usually there are ventilation holes or cross-flow openings spaced longitudinally along the outer edges of the water-cross panels, flow maldistribution between the mini-bundles will lead to transverse pressure gradients capable of producing cross-flow jets of coolant water which may cause undesirable structural vibration. The present unavailability of adequate analytical/computational tools for use in evaluating the thermal-hydraulic-mechanical impact of such conditions leaves further uncertainties in estimating mini-bundles CPR margins.

Third, and while coolant typically begins to boil approximately after the first meter (few feet) of flow thereof along the heated surfaces in a fuel rod bundle of a BWR, flow maldistribution tends to cause such boiling to begin in the various mini-bundles at different axial locations, thereby causing a disparity in the amount of void (steam space) generated in the various mini-bundles which, in turn, is indicative of improper neutron moderation and, hence, neutron utilization.

It is the principal object of the invention to alleviate these problems by eliminating or at least minimizing mini-bundle inlet flow maldistribution.

The invention accordingly resides in a nuclear fuel assembly comprising a bundle of fuel rods arrayed in parallel spaced relationship with respect to each other, a tubular flow channel surrounding said bundle of fuel rods for directing a reactor-coolant/neutron-moderator fluid therealong, and a hollow water-cross which has a lower inlet end and an upper outlet end and extends axially through the flow channel so as to divide the latter into separate compartments and divide the bundle of fuel rods into mini-bundles disposed in the respective compartments, characterized in that the lower inlet end (38) of the water-cross (26) is disposed at a level spaced above the lower ends of the fuel-rod mini-bundles at a distance sufficient to provide, in a lower portion of said flow channel (12), a flow mixing chamber (56) which permits free coolant/moderator cross-flow between the fuel-rod mini-bundles at lower end portions (54) thereof.

It has been found that the flow mixing chamber, by enabling free cross-mixing of the coolant/moderator liquid to occur before the coolant/moderator flow is constrained to follow generally straight axial paths through the individual fuel-rod mini-bundles, virtually eliminates the problem of flow maldistribution since any inlet-flow maldistribution will, as was likewise observed, decay exponentially and down to a negligible level within the first few decimeters (about 15—30 cm) of coolant flow after entry of the coolant into the fuel assembly. Therefore, the lower or inlet end of the water-cross preferably is at a level spaced at least 15 cm above the lower ends of the fuel-rod mini-bundles including their lower tie plates.

A preferred embodiment of the invention will now be described, by way of example only, with reference to the accompanying drawings, in which:

Fig. 1 is an elevational view, with parts broken away and sectioned for clarity, of a BWR nuclear fuel assembly embodying the invention;

Fig. 2 is an enlarged top plan view of the fuel assembly as seen along line 2—2 of Fig. 1;

Fig. 3 is an enlarged bottom plan view of the fuel assembly as seen along line 3—3 of Fig. 1;

Fig. 4 is a cross-sectional view of the fuel assembly taken along line 4—4 of Fig. 1, showing the fuel rod support grid of one mini-bundle in solid lines while showing the grids of the remaining mini-bundles only in phantom; and

Fig. 5 is a cross-sectional view of the fuel assembly taken along line 5—5 of Fig. 1.

In the following description, like refrence characters designate like or corresponding parts throughout the several figures of the drawings, and terms such as "forward", "rearward", "left", "right", "upward", "downward" and the like are employed as words of convenience not to be construed as limiting terms.

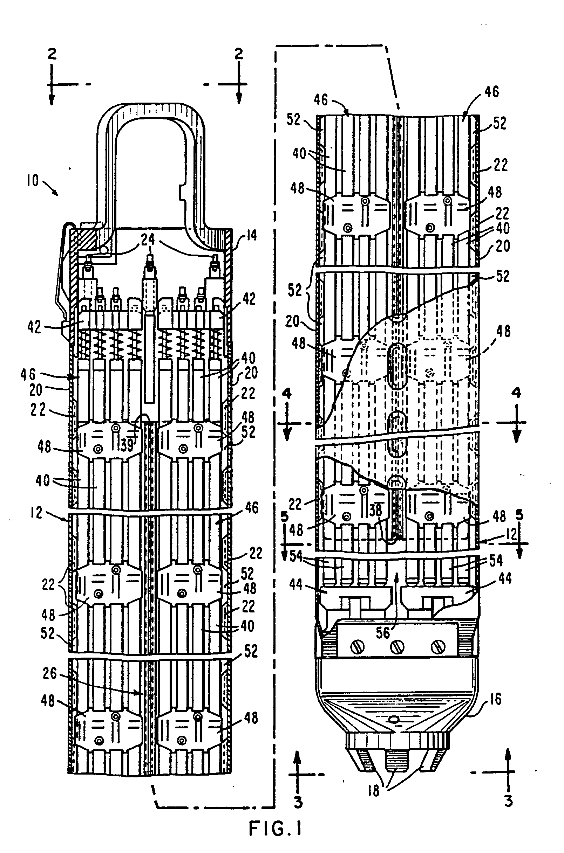

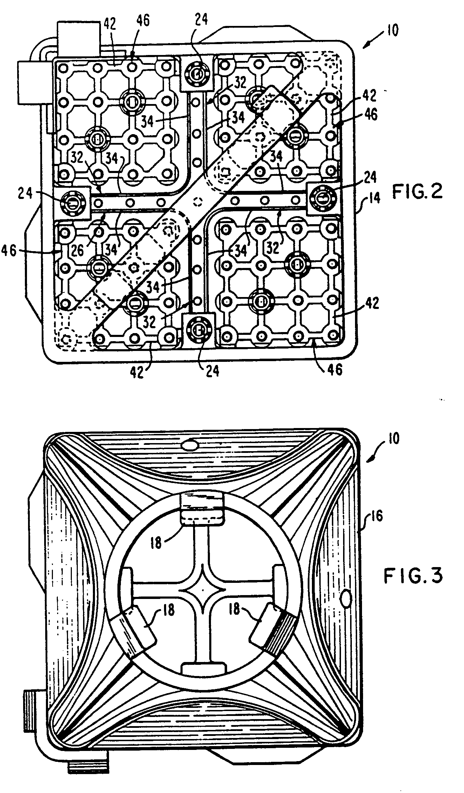

Referring now to the drawings, and particularly to Figs. 1 to 3 thereof, the fuel assembly illustrated therein and generally designated with reference numeral 10 is for use in a boiling water reactor (BWR), and it includes an elongate, tubular outer flow channel 12 which extends substantially throughout the length of the fuel assembly and is connected at its opposite ends to an upper support fixture or top nozzle 14 and a lower base or bottom nozzle 16. The bottom nozzle 16 serves as an inlet for coolant flow into the outer channel 12, and it has legs 18 for guiding the fuel assembly 10 into a reactor-core support plate (not shown) or, as the case may be, for storage into fuel storage racks in a spent-fuel pool, for example.

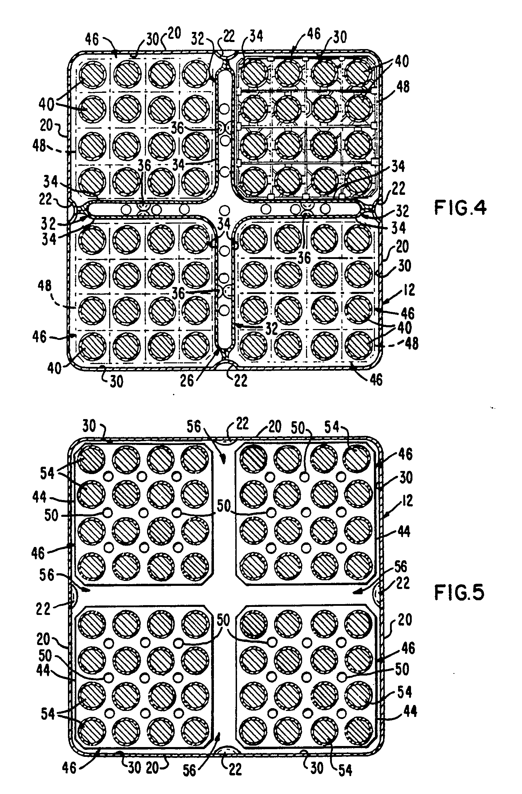

The outer flow channel 12, made of a suitable material, such as a zirconium alloy known as Zircalloy, and having a generally rectangular cross-section (see also Figs. 4 and 5), has four interconnected vertical walls 20 each having a vertical row of spaced structural ribs 22 formed on the inner surface thereof about halfway between the lateral edges of the respective wall 20. The top nozzle 14 is connected to the outer channel 12 by means of upright attachment studs 24 affixed to the respective walls 20 of the flow channel above the uppermost structural ribs 22.

In order to improve neutron moderation and economy, the fuel assembly 10 is provided with a hollow water-cross 26 (see Figs. 1, 2 and 4) which extends axially through the outer flow channel 12 and forms a coolant/moderator flow channel of cruciform cross-section therethrough. The water-cross 26 which divides the interior of the outer flow channel 12 into four separate longitudinal compartments 30 consists of four hollow radial panels 32 formed of four elongate, generally L-shaped sheet-metal members or plates 34 arranged and joined together such that each L-shaped member has each of the two legs thereof disposed in parallel spaced relationship with one leg of another of the remaining L-shaped members, as seen best from Fig. 4, so that each pair of parallel spaced legs forms one hollow panel 32 which at its radially outer end is sealed in that the two parallel spaced legs are joined, e.g. welded, together along their outer edges, and which at its radially inner end is in open fluid flow communication with the other hollow radial panels 32 of the water-cross. The L-shaped sheet-metal members 34 have dimples 36 formed thereon for maintaining accurate spacing between the walls of each water-cross panel 32. Preferably, the dimples 36 on each water-cross panel wall (i.e. each leg of each L-shaped member 34) are arranged in a vertical row, and each dimple 36 of the row abuts and preferably is joined, e.g. welded, to one of the dimples 36 on the opposite water-cross panel wall.

The hollow water-cross 26 is secured to the outer channel 12, preferably by having its radial panels 32 connected, e.g. welded, along their radially outer ends to the structural center ribs 22 on the respective walls 20 of the outer channel 12 so as to fixedly center the water-cross 26 within the latter. Coolant/moderator enters and exits the cruciform flow channel within the water-cross 26 through the lower or inlet end 38 and the upper or outlet end 39, respectively, of the water-cross.

In the embodiment illustrated herein, the outer flow channel 12 surrounds a bundle of sixty-four fuel rods 40 arrayed 8×8 and divided by the water-cross 26 into four mini-bundles each consisting of sixteen fuel rods arrayed 4×4 and separated from the adjacent mini-bundles by the respective radial panels 32 of the water-cross. The fuel rods 40 of each mini-bundle extend between and are connected to an upper tie plate 42 and a lower tie plate 44, and they are laterally supported by grids 48 axially spaced apart. The fuel rods 40 of each mini-bundle together with the associated tie plates 42, 44 and grids 48 form a fuel-rod sub-assembly 46 into and from which coolant/moderator liquid flows, during operation of the reactor, through openings 50 formed in the tie plates 42 and 44. The spaces 52 (Fig. 1) between the longitudinally spaced ribs 22 on each wall of the outer flow channel 12 provide fluid flow communication between the fuel-rod subassemblies 46 within the various compartments 30 of the flow channel, thereby enabling pressure equalization to take place between the compartments and, hence, minimizing the possibility of thermal and hydrodynamic instability between the fuel-rod subassemblies 46.

Referring now in particular to Figs. 1 and 5, it will be seen therefrom that the BWR fuel assembly 10 embodying the invention has a flow mixing chamber 56 disposed in a lower region of the outer flow channel 12, which flow mixing chamber permits free cross-flow of coolant/moderator between the lower end portions 54 of the fuel-rod mini-bundles and thereby obviates the problem of flow maldistribution. This mixing chamber 56 extends from the lower tie plates 44 of the fuel-rod mini-bundles axially up to a height less than the distance to the lowermost grid 48 of each mini-bundle. More particularly, the flow-mixing chamber 56 extends from the lower tie plates 44 upward to the lower or inlet end 38 of the water-cross 26 and, as seen from Fig. 5, has a symmetrically cruciform cross-section as defined by the lower end portions 54 of the fuel-rod mini-bundles and their associated lower tie plates 44. Again as seen from Fig. 1, the inlet end 38 of the water-cross 26 is at a level above the lower tie plate 44 and below the lowermost grid 48 of each fuel-rod sub-assembly 46, said level being nearer to the lowermost grids than to the lower tie plates, and preferably being spaced about 15 cm to 30 cm above the lower tie plates 44.

## Claims

1. A nuclear fuel assembly comprising a bundle of fuel rods arrayed in parallel spaced relationship with respect to each other, a tubular flow channel surrounding said bundle of fuel rods for directing a reactor-coolant/neutron-moderator fluid therealong, and a hollow water-cross which has a lower inlet end and an upper outlet end and extends axially through the flow channel so as to divide the latter into separate compartments and divide the bundle of fuel rods into mini-bundles disposed in the respective compartments, characterized in that the lower inlet end (38) of the water-cross (26) is disposed at a level spaced above the lower ends of the fuel-rod mini-bundles at a distance sufficient to provide, in a lower portion of said flow channel (12), a flow mixing chamber (56) which permits free coolant/moderator cross-flow between the fuel-rod mini-bundles at lower end portions (54) thereof.

2. A nuclear fuel assembly according to claim 1, characterized in that said flow mixing chamber (56) has a transverse cross-sectional configuration substantially corresponding to that of the hollow water-cross (26).

3. A nuclear fuel assembly according to claim 2, characterized in that said flow mixing chamber (56) is axially aligned with said hollow water-cross (26).

4. A nuclear fuel assembly according to claim 1, 2 or 3, characterized in that each of the fuel-rod mini-bundles includes axially spaced transverse grids (48) which laterally support the fuel rods (40) of the mini-bundle, and an upper tie plate (42) and a lower tie plate (44) connected respectively to the opposite ends of said fuel rods (40), said lower inlet end (38) of the water-cross (26) being at a level below the lowermost grids (48) and above the lower tie plates (44) of the respective mini-bundles, and being nearer to said lowermost grids than to said lower tie plates.

5. A nuclear fuel assembly according to claim 4, characterized in that said lower inlet end (38) of the water-cross (26) is at a level at least 15 cm above said lower tie plates (44).

## Patentansprüche

1. Kernbrennelement mit einem Bündel von Brennstäben, die mit gegenseitigen Abständen parallel zueinander angeordnet sind, einem das Brennstabbündel umgebenden, rohrförmigen Strömungskanal zum Führen einer Reaktorkühlmittel-/Neutronenmoderatorflüssigkeit entlang der Brennstäbe, und mit einem hohlen Wasserkreuz, welches ein unteres Einlaßende und ein oberes Auslaßende aufweist und axial durch den Strömungskanal führt, so daß letzterer in separate Kammern und die Brennstabbündel in Kleinbündel unterteilt werden, die in den entsprechenden Kammern angeordnet sind, dadurch gekennzeichnet, daß das untere Einlaßende (38) des Wasserkreuzes (26) in einer Position oberhalb der unteren Enden der Brennstab-Kleinbündel mit ausreichender Distanz gelegen ist, daß in einem unteren Bereich des Strömungskanals (12) eine Strömungsmischkammer (56) gebildet ist, die eine freie Kühlmittel/Moderator-Querströmung zwischen den Brennstab-Kleinbündeln an deren unteren Endbereichen (54) ermöglicht.

2. Kernbrennelement nach Anspruch 1, dadurch gekennzeichnet, daß die Strömungsmischkammer (56) eine Querschnittsform aufweist, die im wesentlichen derjenigen des hohlen Wasserkreuzes (26) entspricht.

3. Kernbrennelement nach Anspruch 2, dadurch gekennzeichnet, daß die Strömungsmischkammer (56) mit dem hohlen Wasserkreuz (26) axial ausgerichtet ist.

4. Kernbrennelement nach Anspruch 1, 2 oder 3, dadurch gekennzeichnet, daß jedes der Brennstab-Kleinbündel axial mit Abstand angeordnete, querliegende Gitter (48) zum seitlichen Abstützen der Brennstäbe (40) der Kleinbündel, und eine obere Verbindungsplatte (42) und eine untere Verbindungsplatte (44) aufweist, welche jeweils mit gegenüberliegenden Enden der Brennstäbe (40) verbunden sind, wobei das untere Einlaßende (38) des Wasserkreuzes (26) in einer Position unterhalb des untersten Gitters (48) und oberhalb der unteren Verbindungsplatten (44) der entsprechenden Kleinbündel und näher an den untersten Gittern als an den unteren Verbindungsplatten gelegen ist.

5. Kernbrennelement nach Anspruch 4, dadurch gekennzeichnet, daß das untere Einlaßende (38) des Wasserkreuzes (26) mindestens 15 cm oberhalb der unteren Verbingsplatten (44) gelegen ist.

## Revendications

1. Assemblage combustible nucléaire comportant un faisceau de barres de combustible disposées en relation d'espacement parallèle les unes par rapport aux autres, un canal d'écoulement tubulaire entourant ledit faisceau de barres de combustible pour diriger un fluide modérateur de neutrons et caloporteur de réacteur le long de celles-ci, et un passage d'eau en croix creux qui a une extrémité d'entrée inférieure et une extrémité de sortie supérieure et qui s'étend axialement à travers le canal d'écoulement de façon à diviser ce dernier en compartiments séparés et à diviser le faisceau de barres de combustible en mini-faisceaux disposés dans les compartiments respectifs, caractérisé en ce que l'extrémité (38) d'entrée inférieure du passage (26) d'eau en croix est disposée à un niveau espacé au-dessus des extrémités inférieures des mini-faisceaux de barres de combustible à une distance suffisante pour réaliser, dans une partie inférieure dudit canal d'écoulement (12), une chambre (56) de mélange d'écoulement qui permet un écoulement transversal libre du modérateur-caloporteur entre les mini-faisceaux de barres de combustible au niveau des parties (54) d'extrémité inférieures de ceux-ci.

2. Assemblage combustible nucléaire selon la revendication 1, caractérisé en ce que ladite chambre (56) de mélange d'écoulement a une configuration de section transversale correspondant substantiellement à celle du passage (26) d'eau en croix creux.

3. Assemblage combustible nucléaire selon la revendication 2, caractérisé en ce que ladite chambre (56) de mélange d'écoulement est alignée axialement avec ledit passage (26) d'eau en croix creux.

4. Assemblage combustible nucléaire selon les revendications 1, 2 ou 3, caractérisé en ce que chacun des mini-faisceaux de barres de combustible comporte des grilles (48) transversales axialement espacées qui supportent latéralement les barres de combustible (40) du mini-faisceau, et une plaque de liaison supérieure (42) et une plaque de liaison inférieure (44) connectée et respectivement aux extrémités opposées desdites barres de combustible (40), lesdites extrémités (38) d'entrée inférieure du passage d'eau en croix (26) étant à un niveau situé en dessous des grilles les plus basses (48) et au-dessus des plaques de liaison inférieures (44) des mini-faisceaux respectifs, et étant plus proches desdites grilles les plus basses que desdites plaques de liaison inférieures.

5. Assemblage combustible nucléaire selon la revendication 4, caractérisé en ce que ladite extrémité (38) d'entrée inférieure du passage d'eau en croix (26) est à un niveau situé au moins à 15 cm au-dessus desdites plaques de liaison inférieures (44).

FIG.1

EP 0 206 163 B1

FIG.2

FIG.3

2

FIG.4

FIG.5